# EUROPEAN PATENT APPLICATION

(11) **EP 2 420 706 A1**
(43) Date of publication of application: **22.02.2012**
(21) Application number: 11004296.7
(22) Date of filing: 25.05.2011
(51) Int. Cl.: F16J 15/12, F16L 5/10

(54) **Tight package sensor seal**

(30) Priority: 20.08.2010 US 860558
(71) Applicant: Carl Freudenberg KG, 69469 Weinheim (DE)
(72) Inventor: Wagner, John, B., Greenfield IN 46140 (US); Myers, Kane, A., Indianapolis IN 46259 (US); Cloud, J. Brian, Greenwood IN 46143 (US)

(57) **Abstract**

A tight package sensor seal includes a first seal portion engaging an outer surface of a sensor body and including a stop surface floatingly engaging a peripheral face surrounding a bore in a cover member. The first seal portion includes a reinforcing insert disposed therein. A second seal portion is axially spaced from the first seal portion and a flexible membrane extends axially between the first and second seal portions. The second seal portion engages an inner diameter of a bore in a cover member and includes a reinforcing insert therein. The sensor seal takes up a small radial space yet allows for radial offset of the sensor body relative to the bore of the cover member.

## Description

### CROSS-REFERENCE TO RELATED APPLICATIONS

This application is a divisional of United States Patent Application No. 11/687928, filed March 19, 2007. The entire disclosure of the above application is incorporated herein by reference.

### FIELD

The present disclosure relates to seals and more particularly, to a tight package sensor seal.

### BACKGROUND

The statements in this section merely provide background information related to the present disclosure and may not constitute prior art.

Seals are commonly used for sealing a gap disposed around an outer surface of an inner member received within a bore of an outer member. Typically, the gap is sized so as to fully accommodate the seal member radially between the outer surface of the inner member and the inner surface of the bore. When the gap is very narrow, the tolerances for accommodating offset of the inner member relative to the bore, are very tight. Accordingly, it is desirable in the art to provide a seal arrangement that has a tight package and is capable of accommodating for radial offset of the inner member relative to an outer member.

### SUMMARY

A tight package sensor seal includes a first seal portion engaging an outer surface of a sensor body and including a stop surface floatingly engaging a peripheral face surrounding a bore in a cover member. The first seal portion includes a reinforcing insert disposed therein. A second seal portion is axially spaced from the first seal portion and a flexible membrane extends axially between and connects the first and second seal portions. The second seal portion engages an inner diameter of a bore in a cover member and includes a reinforcing insert therein. The sensor seal takes up a small radial space yet allows for radial offset of the sensor body relative to the bore of the cover member.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.

Figure 1 is a partial cross-sectional view illustrating a tight package seal, according to the principles of the present disclosure, applied to a sensor received in a bore in a cover member; and

Figure 2 is a detailed cross-sectional view of the tight package seal according to the principles of the present disclosure.

### DETAILED DESCRIPTION

The following description is merely exemplary in nature and is not intended to limit the present disclosure, application, or uses. It should be understood that throughout the drawings, corresponding reference numerals indicate like or corresponding parts and features.

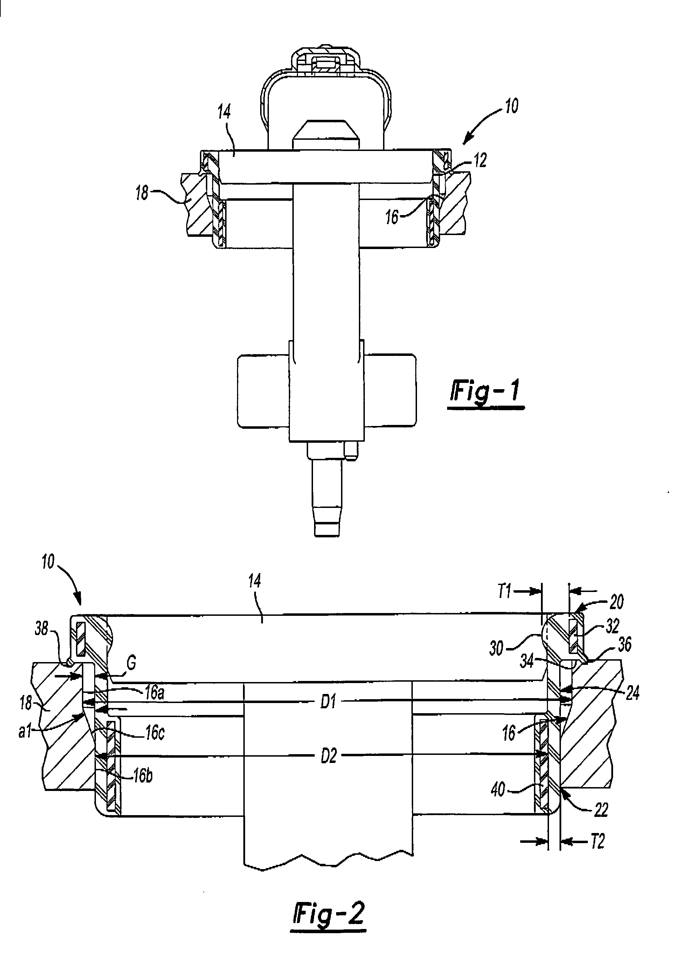

With reference to Figures 1 and 2, a tight package seal 10 according to the present disclosure will now be described. In Figure 1, the tight package seal 10 is provided in a sealing engagement between an outer surface 12 of a sensor body 14 and a bore 16 of a cover member 18. Although the seal 10 is described herein with reference to a specific embodiment as a sensor seal, it should be understood that the tight package seal 10 can be used in other applications for sealing between an outer surface of a first member and a bore of a second member wherein a limited radial space is provided therebetween.

With reference to Figure 2, the tight package seal 10 includes an annular elastomeric seal body having a first seal portion 20 engaging the outer surface 12 of the sensor body 14. A second seal portion 22 is axially spaced from the first seal portion 20 and sealingly engages an inner surface of the bore 16 of the cover member 18. A flexible membrane portion 24 extends generally axially between the first seal portion 20 and the second seal portion 22.

The first seal portion 20 can include a radially inwardly extending raised bead portion 30 and can further include a reinforcing metal insert 32 embedded within the elastomeric material. The first seal portion 20 includes a radially outwardly extending stop surface 34 facing axially toward the second seal portion 22. The stop surface 34 engages a perimeter axial face 36 of the cover member 18. The stop surface 34 can include a dust lip 38 extending therefrom and axially engaging the face 36 of the cover member 18. A thickness T1 of the elastomeric material in the first seal portion 20 can be adjusted to allow for tighter or looser engagement with the outer surface 12 of the sensor body 14.

The bore 16 in the cover member 18 can include a first, outboard, portion 16a having a first diameter D1 and a second, inboard, portion 16b having a second diameter D2 which is smaller than D1. The first diameter D1 is larger than an outer diameter of the flexible membrane portion 24, so as to define a gap G between the flexible membrane portion 24 and the first portion 16a of the bore 16. An intermediate portion 16c of the bore 16 can define a tapered surface extending between the first portion 16a and the second portion 16b. The tapered surface can be provided with an angle a1. The angle a1 can be selected to allow lateral offset of the flexible membrane portion 24 relative to the first portion 16a of the bore 16. An angle a1 of between 10 and 30 degrees is preferred, although other angles can be used.

The second seal portion 22 has an outer diameter slightly larger than the diameter D2 of the second portion 16b of the bore 16 in order to provide a sealing engagement therebetween. The second seal portion can include a reinforcing metal insert 40 therein. A thickness T2 of the elastomeric material in the second seal portion 22 can be adjusted to allow for tighter or looser engagement with the inner surface 16b of the bore 16. Preferably, the thickness T2 is less than the thickness T1 to facilitate firmly holding the seal 10 within the bore 16 when the sensor body is inserted or removed.

The tight package seal 10 provides a sealed relationship between the sensor body 14 and the bore 16 wherein the sealed engagement with the sensor body 14 and the bore 16 are axially offset. The seal 10 also allows the sensor body 14 to be laterally offset relative to the bore 16 at least by the amount of the gap G between the flexible membrane portion 24 and the first portion 16a of the bore 16. The stop surface 34 and dust lip 38 of the first seal portion 20 provide a secondary seal engagement that is able to float radially to accommodate for lateral off set of the sensor body 14 relative to the bore 16.

## Claims

1. A sealing arrangement for a sensor, comprising:
a sensor body having an outer surface;
a cover member defining a bore;
an elastomeric seal body including:
a first seal portion sealingly engaged with said outer surface of said sensor body,
a second seal portion axially spaced from said first seal portion and adapted to sealing engage an inner surface of said bore, and
a flexible membrane portion extending axially between said first seal portion and said second seal portion.

2. The sealing arrangement according to claim 1, wherein said first seal portion includes a radially outwardly extending stop surface facing axially toward said second seal portion.

3. The sealing arrangement according to claim 2, wherein said radially outwardly extending stop surface includes a dust lip extending therefrom.

4. The sealing arrangement according to claim 2, wherein said radially outwardly extending stop surface engages a perimeter axial face of said cover member surrounding said bore.

5. The sealing arrangement according to claim 1, wherein said bore includes a first diameter portion adjacent to said flexible membrane portion and a second diameter portion adjacent to said second sealing portion, said first diameter portion being larger than said second diameter portion.

6. The sealing arrangement according to claim 5, wherein said second sealing portion and said flexible membrane portion each have a same outside diameter.

7. The sealing arrangement according to claim 5, wherein said bore includes a tapered surface between said first diameter portion and said second diameter portion.

8. The sealing arrangement according to claim 1, wherein a gap is provided between said flexible membrane portion and said bore.

9. The sealing arrangement according to claim 1, wherein said first sealing portion is laterally movable relative to said bore to accommodate for lateral offset of said sensor body relative to said bore in said cover member,

10. The sealing arrangement according to claim 1, wherein said first seal portion and said second seal portion each include a metal reinforcing insert therein.
